# EUROPEAN PATENT APPLICATION

(11) **EP 0 903 872 A1**
(43) Date of publication of application: **24.03.1999**
(21) Application number: 97402157.8
(22) Date of filing: 17.09.1997
(51) Int. Cl.: H04B 7/26, H04L 1/12, H04B 7/005

(54) **Radio communication system having a frame transmission format and a method of providing the same**

(71) Applicant: MOTOROLA, INC., Schaumburg, IL 60196 (US)
(72) Inventor: Whinnett, Nick, 75004 Paris (FR); Gosse, Karine, 75014 Paris (FR)
(74) Representative: Joly, Jean-Jacques

(57) **Abstract**

A radio communication system (100) includes a controller (109) for providing a frame transmission format transmitting data bursts in a fixed frame structure. The controller (109) determines the transmission requirements of a communication service to be provided. Based on that transmission requirement and an estimate of the communication channel, the number of required training bits, data bits in a data burst and the allocation of the data burst within the fixed framing structure is determined to maintain the transmission requirement of the communication service.

## Description

### Field of the Invention

Generally, the present invention concerns a Radio Communication System having a frame transmission format and a method of providing the same, and more specifically a Radio Communication System having a controller that provides a flexible frame transmission format and a method of providing the same.

### Background of the Invention

Generally, in time division multiple access (TDMA) Communication Systems, an equaliser is used in a radio receiver in order to remove channel induced distortion. Such an equaliser relies on an estimate of the channel over which data is being communicated. This channel estimation can be in the form of a direct estimate equaliser such as an MLSE (Minimum Least Squares Error), or alternatively a linear or decision feedback equaliser. In order to provide an estimate of the communication channel, the communication system introduces a training sequence which contains a series of known bits in the data burst transmitted between a transmitter and the receiver. The receiver then compares the received version of the training sequence with the original known training sequence to estimate the transmission channel.

The accuracy of the estimate is directly related to the number of bits contained in the training sequence. It is well known that twice as many training symbols are needed in order to provide the taps required by the channel estimate. However, increasing the length of the training sequence reduces the bit rate available for data bits in that data burst.

In wide band transmission systems, such as a wide band TDMA system, the delay between the first and last channel coefficients is larger than previously used narrow band systems such the global system for mobile communications (GSM). Moreover, this excess delay varies depending upon the environment in which the call is set up or the communication system is operating. For example, in an indoor environment, delay may be 310 nSec (nano seconds), while in a vehicular high speed outdoor environment the delay may reach 20,000 nSec. In order to provide a training sequence of a length required in the worst case vehicular environment, the length or numbers of bits in the training sequence must be longer than what has been provided in previous narrow-band systems such as GSM. Unfortunately, the longer training sequences reduce the useful bit rate of the communication channel, because the ratio of sequence bits to data becomes very small.

Therefore if we were to design a system for the worst case scenario, the training sequence would be very large, the effective data rate would be very low and the training sequence would be over-designed for an environment having less distortion than the worst case environment. Therefore, there is a need for a mechanism ensuring that the training sequence is always of sufficient but minimum length in order to estimate or equalise the communication channel. Ideally, this mechanism would not affect or change the transmission requirements for the communication service being provided.

### Brief Description of the Drawings

FIG. 1 is an illustration of a radio communication system that may be utilised in accordance with the present invention.
FIG. 2 is an illustration of a communication unit for use in the radio communication system of FIG. 1.
FIG. 3 is an illustration of the mapping of speech data into data bursts in a fixed frame structure for transmission over a communication channel as is known in the art.
FIG. 4 is an illustration of mapping speech data onto bursts transmitted in a fixed frame structure in accordance with the present invention.
FIG. 5 is an illustration of a process flow chart in accordance with the present invention.
FIG. 6, FIG. 7, and FIG. 8 are illustrations of the performance of the present invention versus the performance of the prior art.

### Description of a Preferred Embodiment

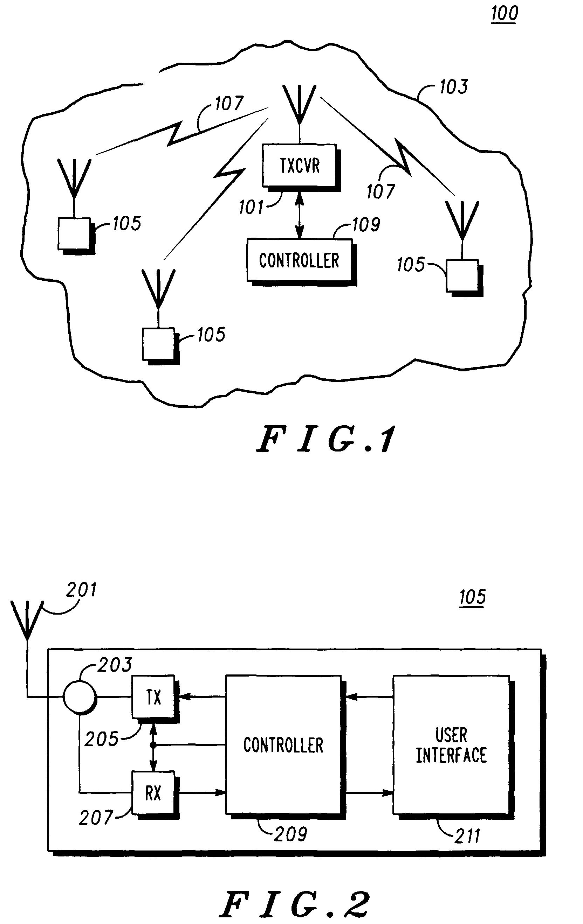

FIG. 1 is an illustration of radio communication system which may be used in accordance with the present invention. Radio communication system 100 includes a base transceiver 101 that provides a variety of communication services to a plurality of remote unit transceivers 105 in a pre-determined coverage area 103. Each of the radio communication services, such as voice, data and video, have a set of transmission requirements that need to be met, namely: a useful bit rate, a maximum bit rate and a total transmission delay. The communication services are provided over a radio channel 107 between the base transceiver 101 and the remote unit transceivers 105. In order to utilise the present invention, a controller must be provided for the communication system 100 in order to provide a frame transmission format for the provision of services of the communication channels. In the preferred embodiment, a controller 109 is provided to an interface of the base transceiver 101, FIG. 1. Alternatively, the controller may be incorporated into the base transceiver 101 or may be incorporated into a remote unit transceiver 105 or possibly the functionality could be distributed throughout the system.

FIG. 2 is an illustration of a remote unit transceiver 105 from FIG. 1. This remote unit transceiver 105 includes an antenna 201 a duplexer 203, a transmitter 205, a receiver 207, a controller 209 and a user interface 211. Preferably, the remote unit transceiver is a GSM StarTac™ Mobile Phone modified for use on the communication system as described herein. An unmodified StarTac™ Cellular Phone is available from Motorola GmbH in Germany. The antenna 201 transmits and receives radio frequency (RF) communication signals to and from a base transceiver such as base transceiver 101 of FIG. 1. The user interface 211 typically contains a display for displaying text and/or video, a speaker, a microphone, and a data-input device, such as a keypad.

Upon reception of radio frequency signals, they are routed through the duplexer 203 to the receiver 207. The receiver 207 demodulates the receive signals, equalises the signals and then detects the symbols that were provided in the received RF signals. Preferably, the equaliser is a Viterbi-type equaliser. However, it is understood that the equaliser could be linear, non-linear, and MLSE, or decision feedback equaliser or any other equivalent equaliser of the type known. The detected symbols from the receiver are transmitted to the controller 209. The controller 209 formats the symbols into user-recognisable data and transmits the user-recognisable data to the user interface 211.

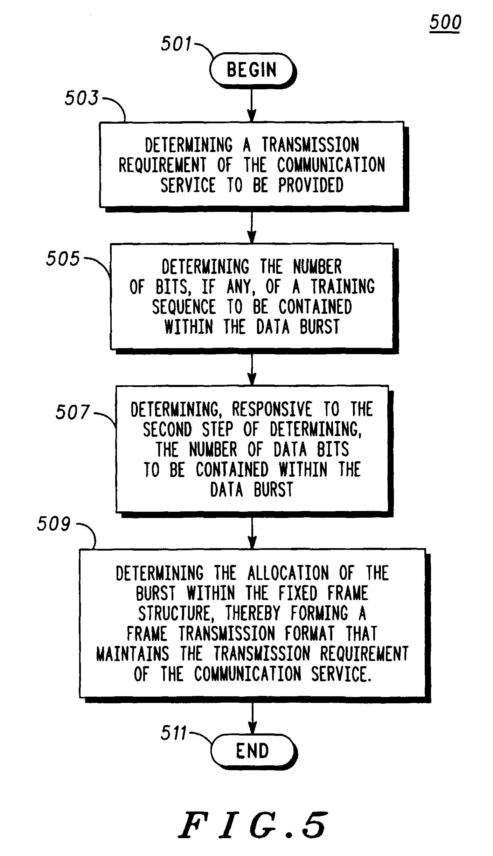

Upon transmission of data, the user interface 211 captures the desired data from the user via the microphone or keypad and transmits the desired data to the controller 209. The controller 209 formats the desired data into data time slots including a training sequence, after providing channel coding and interleaving. The data time slots may contain speech, video or text data or any other type of data that is desired to be communicated. The data time slots are then allocated into a fixed frame structure, illustrated in FIG. 4. The number of data bits and training sequence bits contained in the data time slots and the allocation of the resulting data burst are determined according to a method illustrated in FIG. 5 and described in the accompanying text. The frames are then sent to the transmitter 205 for transmission to the base transceiver 101 of FIG. 1.

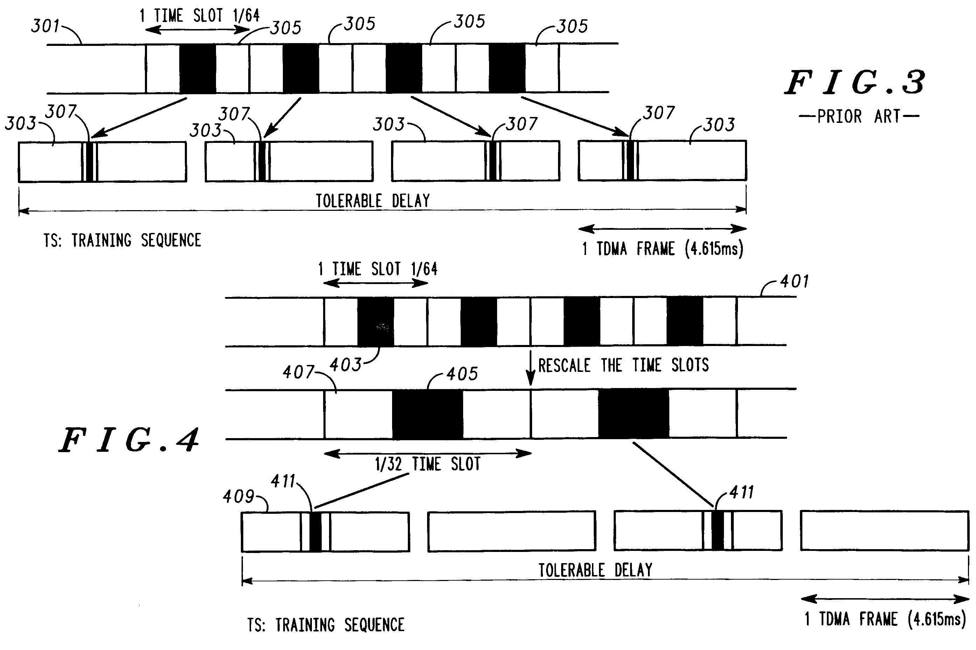

FIG. 3 is an illustration of how multiple data time slots 301 are mapped into a fixed frame structure containing fixed frames 303 in the prior art. In this particular example, 4 timeslots 305 are captured within 4 frames 303 of the fixed framing structure. This example is a proposal of frames mode 1a for transmitting low bit-rate services such as 8 kbps (kilo-bit per second) speech. In this proposal, a training sequence 307 is interleaved into the time slots 305 of speech data. A number of bits in the training sequence 307 is fixed for the entire system independent of channel conditions. In this particular example 342 information bits, 49 training bits, 342 information bits (1/16 slot) are included in each data time slot with no flexibility on the training sequence length. Additionally channel models for this system include a vehicular model that varies the delay and the channel conditions greatly; making the number of training bits inadequate in some circumstances and excessive in other circumstances.

Typically, transmission requirements for communication services have three useful criteria: namely a useful bit rate, a tolerable bit error rate, and a tolerable transmission delay. The useful bit rate is to be defined as a number of usable data bits over a number of total bits in the transmission. Thus, if you have a fixed number of data bits, increasing the number of training sequence bits will reduce your useful bit rate. Typically the higher the useful bit rate, the more efficient the data transmission. The bit error rate is defined as the number of errors tolerated in a data transmission. Typically when transmitting speech, a bit error rate of 0.5% is tolerable, however, in data transmissions the tolerable bit error rate is much lower and closer to 0. The transmission delay is the amount of delay between when the data is input into the communication system as compared to the time when the data has completed its transmission through the communication system. For purposes of this invention, the relevant transmission delay is the number of TDMA frames 303 of the fixed framing structure that are required to transmit the four time slots 305 of speech data.

FIG. 4 is an illustration of the mapping of data contained in the original timeslot structure 401 into data bursts 411 allocated within a fixed frame structure 409 with the intermediate step of rescaling the timeslots prior to mapping in accordance with the present invention. The data bursts 411 being variable in the number of bits and in their allocation within the fixed frame structure. Assuming that the original timeslot structure 401 of FIG. 4 contains orginal timeslots 403 having the desired useful bit rate. This useful bit rat will be maintained during any rescaling of the timeslots so that the transmission requirement of useful bit rate is maintained, although the time slot structure may be modified or rescaled. A controller disposed somewhere within the communication system 100 of FIG. 1, preferably coupled to the base transceiver 101 of FIG. 1, determines the particular rescaling according to the process flowchart illustrated in FIG. 5. In the particular example of FIG. 4, the number of data bits in each time slot is doubled from the original timeslot structure and the number of data bits in the training sequence is doubled thus maintaining the useful bit rate. This increased training sequence 405 now contains enough bits to enable a reliable estimate of the channel and/or the equalisation of the received bursts in an environment that has more noise than can be tolerated by the original timeslot structure 401. These rescaled timeslots 407 can then be allocated as data burst 411 in the fixed frame structure 409. Rescaling of the timeslots allows the communication system to maintain the desired bit error rate in a more noisy environment while maintaining the useful bit rate and the tolerable delay. For instance in the particular example, the tolerable delay for transmitting speech contained in an original timeslot 403 to the end user will be 3 TDMA frames at 4.615 milliseconds per frame. This delay is less than a tolerable delay in the fixed frame structure illustrated in FIG. 3.

FIG. 5 is an illustration of a process flow chart 500 that is preferably deployed in the controller 109 of the communication system 100 of FIG. 1. A process flow chart 500 is used to provide a flexible timeslot structure while maintaining the transmission requirements of the communications service. The process begins at 501. At function block 503, process flow chart 500 determines a transmission requirement of the communication service to be provided. Again, the transmission requirement is service dependant and in the preferred embodiment is made up of a useful bit rate, a bit error rate, and a transmission delay. In the instance of providing 8 kilo-bit per second, speech is the communication service, the tolerable delay is four TDMA frames or 18.46 mil-seconds, a useful bit rate of 684 over 733, and a tolerable bit error rate of 0.5%.

At function block 505, there is the first step in determining a frame transmission format for the communication system. Here, the process flow chart 500 determines the number of bits, if any, of a training sequence to be contained within the data burst. The step of determining the number of bits in the training sequence is dependant upon the conditions of the channel over which the transmission is to take place.

An estimate of the channel conditions can be done in one of vestous ways: during an initial set up of the communication system 100, during the set-up of a particular communication service, or continuously during a communication service. If the number of bits are set during an initial set up of the communication system, then the estimate of channel conditions could be done by geographical location. For example, in hilly terrain, use an increased number of training bits because it is likely that the multi-path distortion would be greater than in an indoor environment. Other considerations would include the vehicular speed of the remote units. For an indoor environment, the speed is likely to be low, thus, a smaller number of bits could be used. For an outdoor environment, remote units are likely to be utilised in vehicles creating speeds in excess of 100 kilometres per hour, thus the number of training bits should be increased to account for the larger multi-path distortion.

If the frame transmission format will be set up at the beginning of the communication service, the channel may be estimated using an initial frame transmission format having, a predetermined number of training sequence bits and analysing the estimate to determine if more or less bits are required in order to meet the desired transmission requirements of the communication service. Using a Viterbi equaliser to estimate the communication channel, if there is high energy at the end of the estimated channel then it can be determined that not enough taps are available in the equaliser and more bits in the training sequence are required. If a linear or decision feedback type equaliser is used, then the number of errors between the original training sequence and the decoded training sequence are greater than desired, than the length of the training sequence should be increased.

If adapting the framing structure continuously or during the initialisation of communication service, it is desirable to compare the amplitude of a tap of a channel equaliser to a threshold and adapt the number of bits in the training sequence in response thereto. Preferably, the number of bits in the training sequence would increase in response to the amplitude of the tap exceeding a threshold and the number of bits in the training sequence would decrease in the event that the amplitude of the tap of the channel equalizer fails to meet a threshold.

At function block 507 the process flow chart 500 determines, responsive to the previous, the number of data bits to be contained within the data burst. Once the number of bits in the training sequence are determined according to function block 505, the number of data bits to be included in the data burst are calculated using the useful bit rate requirement of the communication service. For example, if the number of training sequence bits is doubled from the original training sequence, than the number of data bits in the data burst must be doubled to maintain the useful bit ratio.

At function block 509, the process flow chart 500 determines the allocation of the data burst within the fixed frame structure provided. This determination is made with respect to the tolerable delay for the communication service. For example, in the instance of transmitting 8 kilo-bit per second speech data, the tolerable delay is four TDMA frames. Taking the structure illustrated in FIG. 4, the amount of data transmitted in the rescaled timeslots 407 is twice as much as the original timeslot structure 401, thus, only two data bursts are required to be transmitted. In the preferred embodiment, they were placed in alternating TDMA frames. The delay in this instance is reduced to only 3 TDMA frames, thus maintaining the tolerable delay of the original requirement of 4 TDMA frames. Any other suitable allocation of the data bursts may be used as long as the tolerable delay transmission requirement is met. The process flow chart 500 ends its step 511.

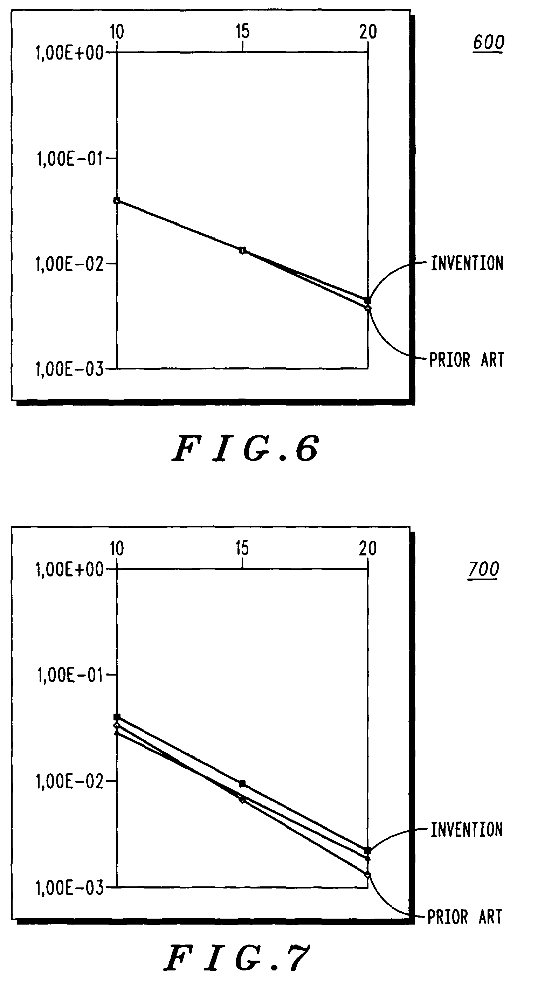

FIG. 6, FIG. 7 and FIG. 8 contain illustrations 600, 700, 800 of the performance of the present invention versus the prior art. The results illustrate the performance of an MMSE-DFE equaliser (Minimum Mean Square Error, Decision Feedback Equaliser) having filter taps computed using a perfect channel estimate or channel coefficients estimated with a training sequence of a given length. The simulation results were obtained for an Eb/No ratio (Eb is original energy and No is the noise energy) of 100dB, so that there are hardly additional effects related to the noise to be taken into account. Filter lengths used are (feedforward: 9, feedback: 5) for the Vehicular A case and (feedforward: 61, feedback: 21) in the Vehicular B case. In the case of a 46-bit training sequence, channels following the Vehicular A model can be equalised after channel estimation, but the bit error probability in case of Vehicular B channels is around 1/3. When the training sequence length is set to 98 bits, the bit error probability is around 5.10⁻² in both channel cases.

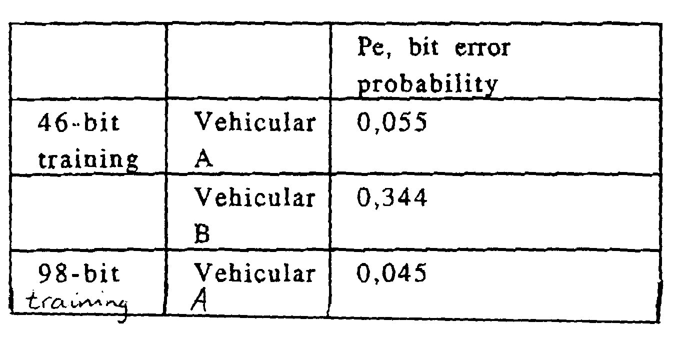

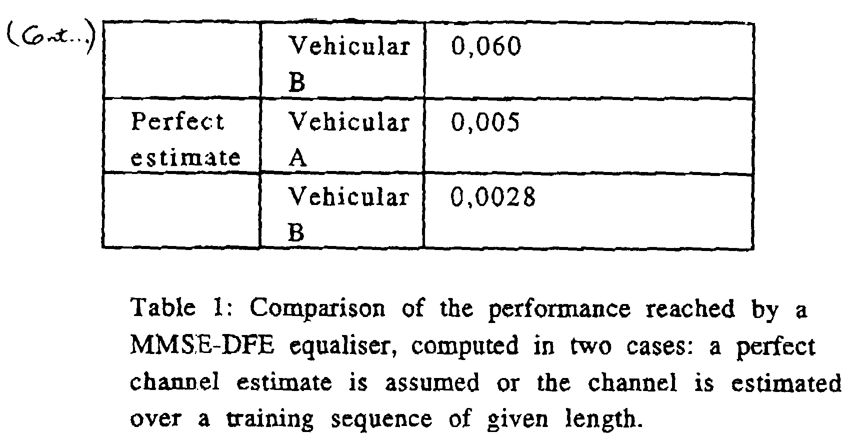

The invention described herein provides an improved frame transmission format that provides a training sequence for the receiver equaliser matched to channel conditions. This major improvement is obtained while the transmission requirements of the communication system are maintained. For example, the useful data rate is maintained, the bit error rate is maintained and the tolerable delay is maintained or reduced. Additionally, there is no additional delay in the decoding process at the receiver since the same amount of data is interleaved. The overall delay related to the receiver is even reduced In the case of a block interleaver. In our example, a block deinterleaving can occur after the reception of 3 frames only (13.845ms) instead of 4 frames (18.460ms). The process is very flexible, since the scaling factor can be adjusted so as to get the minimum necessary training sequence length. The method does not involve any requirements for rate.

The only drawback of this method is that the interleaving will be less effective, because there is less channel diversity (in the example, the encoded bits only go through 2 channels, instead of 4). Simulation results quantify this degradation. It can be shown that the degraduation will be small enough, so that it will never prevent a system using our invention to deliver the Quality of Service required by an application.

FIG. 6, FIG. 7 and FIG. 8 show the BER (Bit Error Rate) vs Eb/No ratio, in the context of a 2.6 Mb/s (megabits per second) QPSK (quadrature phase shift keying), a flat fading (a 1-tap channel), a 1/2 rate convolutional code, an interleaver operating over 4 frames, and 64 slots per frame. For the lower curve, 100 bits are affected to each slot, and each frame captures a slot. The upper curve illustrates the loss in performance while using 200 bits per slot, but only 1 slot over 2 frames.

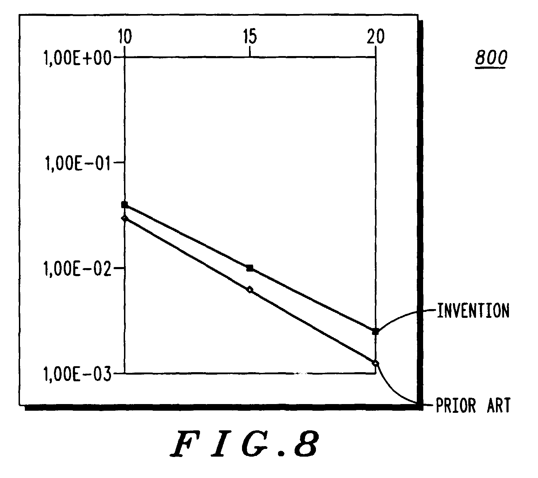

At a mobile speed of 5 km/h (kilometres per hour) as illustrated in chart 600 of FIG. 6, the channel does not vary quickly, and the loss of efficiency in the interleaving process is hardly noticeable. In FIG. 7, chart 700 illustrates a mobile at 25 km/h. Here, the Eb/No ratio required to reach a desired bit error rate increases for the present invention, with respect to the prior art. In FIG. 8, chart 800, illustrates a mobile at 100 km/h. Here the difference in Eb/No ratio is approximately 2dB at 100km/h. However, it must be understood that this slight drawback of this invention will never prevent the communication system 100 from meeting the transmission requirements of a given service, since the lowest performance of a given service is obtained at low speed, where present invention does not substantially differ from the systems of the prior art.

## Claims

1. A radio communication system providing a communication service having transmission requirements, the radio communication system having a radio channel for providing the communication service between a base transceiver and a remote unit, the radio communication system characterised by:
a fixed frame structure for transmitting data bursts, the data bursts being variable in number of bits and in their allocation within the fixed frame structure; and
a controller for determining a number of bits, if any, of a training sequence to be contained within the data burst, a number of data bits to be contained within the data burst and an allocation of the data burst within the fixed frame structure, thereby forming a frame transmission format that maintains the transmission requirements of the communication service.

2. The radio communication system of claim 1 wherein the transmission requirements are chosen from a group consisting of a useful bit rate, a bit error rate and a transmission delay.

3. The radio communication system of claim 1 wherein the controller monitors the radio channel and adapts the number of bits in the training sequence in response to a condition of the radio channel.

4. The radio communication system of claim 3 wherein the controller determines the number of data bits to be contained within the data burst responsive to the number of bits in the training sequence such that a useful bit rate is maintained.

5. The radio communication system of claim 1 wherein the controller determines the allocation of the data burst within the fixed frame structure in order to maintain a tolerable delay requirement of the communication service.

6. The radio communication system of claim 1 wherein the controller determines the frame transmission format during an initial set up of the radio communication system.

7. The radio communication system of claim 1 wherein the controller determines the frame transmission format during a set up of the communication service.

8. The radio communication system of claim 1 wherein the controller determines the frame transmission format continuously during a communication service.

9. The radio communication system of claim 1 wherein the controller compares an amplitude of a tap of a channel equaliser to a threshold and adapts the number of bits in the training sequence in response thereto.

10. The radio communication system of claim 1 wherein the controller monitors decision errors of a received data burst and adapts the number of bits in the training sequence in response thereto.

11. The radio communication system of claim 9 wherein the controller increases the number of bits in the training sequence in response to the amplitude of the tap of the channel equaliser exceeding the threshold.

12. The radio communication system of claim 9 wherein the controller decreases the number of bits in the training sequence in response to the amplitude of the tap of the channel equaliser fails to meet the threshold.

13. A method of providing a frame transmission format for a radio communication system providing a communication service by transmitting data bursts in a fixed frame structure, over a radio channel between a base transceiver (101) and a remote units, the method comprising the steps of:
determining a transmission requirement of the communication service to be provided;
determining a number of bits, if any, of a training sequence to be contained within the data burst;
determining, responsive to the second step of determining, a number of data bits to be contained within the data burst; and
determining an allocation of the data burst within the fixed frame structure, thereby forming a frame transmission format that maintains the transmission requirement of the communication service.

14. The method of claim 13 wherein the transmission requirement is chosen from the group consisting of a useful bit rate, a bit error rate and a transmission delay.

15. The method of claim 13 wherein the step of determining an allocation of the data burst within the fixed frame structure is responsive to a tolerable delay requirement of the communication service.

16. The method of claim 13 wherein the frame transmission format is determined during initial set up of the radio communication system.

17. The method of claim 13 wherein the frame transmission format is determined during set up of the communication service.

18. The method of claim 13 wherein the frame transmission format is determined continuously during a communication service.

19. The method of claim 13 wherein the step of determining a number of bits of the training sequence is responsive to a step of monitoring the radio channel.

20. The method of claim 13 wherein the step of determining a number of bits of the training sequence is responsive to a step of comparing an amplitude of a tap of a channel equaliser to a threshold.

21. The method of claim 13 wherein the step of determining a number of bits of the training sequence is responsive to a step of monitoring the decision errors of a received data burst.

22. The method of claim 20 wherein the step of determining a number of bits of the training sequence further comprises increasing the number of bits in the training sequence in response to the amplitude of the tap of the channel equaliser exceeding the threshold.

23. The method of claim 20 wherein the step of determining a number of bits of the training sequence further comprises decreasing the number of bits in the training sequence in response to the amplitude of the tap of the channel equaliser fails to meet the threshold.
